Europäisches Patentamt

European Patent Office

Office européen des brevets

(11) Veröffentlichungsnummer: **0 244 710 B1**

(19)

(12) **EUROPÄISCHE PATENTSCHRIFT**

(45) Veröffentlichungstag der Patentschrift: **29.01.92**

(21) Anmeldenummer: **87106005.9**

(22) Anmeldetag: **24.04.87**

(51) Int. Cl.$^5$: **C03B 5/04**

(54) **Decke für einen Glasschmelzofen oder eine Arbeitswanne.**

(30) Priorität: **06.05.86 DE 3615276**
**06.04.87 DE 3711045**

(43) Veröffentlichungstag der Anmeldung:
**11.11.87 Patentblatt 87/46**

(45) Bekanntmachung des Hinweises auf die
Patenterteilung:
**29.01.92 Patentblatt 92/05**

(84) Benannte Vertragsstaaten:
**AT BE CH DE ES FR GB IT LI NL SE**

(56) Entgegenhaltungen:
**DE-A- 639 573      DE-A- 2 203 944
FR-A- 2 549 212      US-A- 2 773 111
US-A- 2 834 306      US-A- 3 134 199**

(73) Patentinhaber: **Beteiligungen Sorg GmbH &
Co. KG
Stoltestr. 23
W-8770 Lohr/Main(DE)**

(72) Erfinder: **Sorg, Helmut
Im Himbeergrund 27
W-8752 Johannesberg(DE)**
Erfinder: **Bucar, Matjaz
Am Hulberg 4
W-8771 Karzbach(DE)**

(74) Vertreter: **Schulze Horn, Stefan, Dipl.-Ing.
M.Sc.
Goldstrasse 36
W-4400 Münster(DE)**

Rank Xerox (UK) Business Services

## Beschreibung

Die Erfindung betrifft eine Decke für einen Glasschmelzofen oder eine Arbeitswanne, einen Läuterteil oder dgl. eines Glasschmelzofens (Bassin) aus Feuerfestmaterial, wobei die Decke mit die Arbeitswanne in Abständen überspannenden, die Last der Decke aufnehmenden horizontalen Stützelementen und die freien Abstände zwischen den Stützelementen überdeckenden, quer zwischen den Stützelementen eingelegten horizontalen Abdeckplatten ausgebildet ist.

Bei einem Glasschmelzofen ist es üblich, der eigentlichen Schmelzwanne eine Speiser aufweisende Arbeitswanne nachzuschalten, welche Glasschmelze im Durchfluß enthält. Die Decke der Schmelz- und Arbeitswanne wird dabei üblicherweise von einem Bogen gebildet.

Aus der FR-A1-2 549 212 ist bereits eine Unterstützungskonstruktion der vorstehend genannten Art für Ofengewölbe bekannt, bei welcher Platten aus keramischem Material auf dazu quer verlaufende, einstückige Träger aufgelegt sind. Nachteilig sind auf diese Weise nur einfachste Konstruktionen zu verwirklichen, wobei Wärmeausdehnungen des Materials nicht oder nur unzureichend aufgenommen werden können.

Aus der DE-C-639 573 ist weiterhin ein Glasschmelzofen bekannt, der mit Deckelsteinen abgedeckt ist, die mit Inspektionsöffnungen versehen sind. Vorteile hinsichtlich der Aufnahme der Wärmeausdehnungen, der Montage und des Betriebes ergeben sich aber dadurch nicht.

Aus der US-A-2 834 306 sind letztlich noch Bögen für Schmelzöfen bekannt, bei denen eine Aufnahme der Wärmeausdehnungen erfolgen kann. Die Konstruktion ist aber nachteilig nur für Bögen bestimmt, die einen hohen Raumbedarf aufweisen und nur an Ort und Stelle aufgebaut werden können.

Es sind Arbeitswannen bekannt, bei denen eine Vorkonditionierung des Glases vorgenommen wird.

Üblicherweise sind diese Areitswannen in beliebigen Grundrißformen ausgebildet und haben meist einen ungeteilten Verbrennungsraum, eine Distanz zwischen Glasbadoberfläche und Gewölbe von mehr als 50 cm und können meist nur insgesamt temperaturgesteuert werden. Der Einbau von Rührern oder Thermoelementen ist aufgrund der großen Distanz von Glasbad zu Gewölbe sehr schwierig.

Der Aufbau des Oberofens ist sehr aufwendig, da das Gewölbe nur aus relativ kleinformatigen Steinen gemacht werden kann.

Eine effiziente Beeinflussung und Kontrolle der Zustandsparameter der Glasschmelze von der Decke her war bisher weder üblich noch machbar. Dies gilt auch für die eigentliche Schmelzwanne. Es konnte daher geschehen, daß trotz aller Erfahrung und Einstellung der Mittel zur Temperaturbeeinflussung der erst im Bereich der Speiser erfaßbare Zustand der Glasschmelze nicht immer optimal war.

Der Erfindung liegt die Aufgabe zugrunde, eine Arbeitswanne und Speiser eines Glasschmelzofens mit einem von einer Strahlungsdecke aus hochhitzebeständigen Ofenbausteinmaterial abgedeckten, Glasschmelze im Durchfluß enthaltenden Bassin mit wenigstens einem an diesem angeordneten Speiser in wesentlich verbesserter Bauform anzugeben, um hierdurch die erforderlichen und vorgesehenen Zustandsparameter der Glasschmelze auf dem Durchflußwege von der Schmelzwanne durch die Arbeitswanne zu den Speisern laufend kontrollieren und in gewünschter Weise beeinflussen und einstellen zu können. Hierfür soll die Ausgestaltung der Arbeitswanne und insbesondere der Strahlungsdecke unkompliziert sein, einen Kontrollzugang zur Glasschmelze ohne Schwierigkeiten an unterschiedlichen Stellen ermöglichen und Mittel zur Beeinflussung der Temperatur einsetzbar machen. Auch soll es möglich sein, an hierfür besonders geeigneter Stelle der Arbeitswanne Geräte zum Messen von Temperatur und/oder Viskosität, gegebenenfalls Heiz- oder Kühlelemente sowie Mittel zur Konvektionsbeeinflussung wie Rührer oder Dämmelemente an geeigneter Stelle mit der Glasschmelze in Verbindung zu bringen.

Die Lösung der gestellten Aufgabe gelingt mit einer Decke der eingangs genannten Art, die erfindungsgemäß die im kennzeichnenden Teil des Anspruches 1 angegebenen Merkmale hat, wobei der scheitrechte Bogen als an sich bekannt zu gelten hat.

Die scheitrechte Bögen sind hierbei als transportable Einheiten geschaffen, die auch während des Auftemperns keine Einstellung mehr zu haben brauchen, die weiterhin reparaturgünstig sind, wobei über dem Oberbau eines Ofens oder Ofenteils keine Konstruktionsteile mehr vorliegen, die das Einbringen von Kühlelementen, Heizungselementen, Temperaturmeßelementen oder Rührern und dergleichen behindern und wodurch es ermöglicht wird, daß der Betreiber eines Ofens selbständig die Reparatur vornehmen kann.

Mit großem Vorteil wird dadurch, daß bei der erfindungsgemäße Decke die Last der Decke nicht von einem geschlossenen Gewölbe aufgenommen wird, sondern daß zu diesem Zweck die Arbeitswanne in Abständen überspannende, die Last der Decke aufnehmende horizontale Stützelemente aufweist, wobei die freien Abstände zwischen den Stützelementen überdeckende, quer zwischen den Stützelementen eingelegte horizontale Abdeckplatten vorhanden sind, eine sehr unkomplizierte Zugänglichkeit der Oberfläche der Glasschmelze von oberhalb der Decke ermöglicht.

Bei der erfindungsgemäße Decke gemäß Anspruch 1 wird eine sehr vorteilhafte und ökonomische Bauweise der Decke dadurch erreicht, daß die sowohl für die Stützelemente als auch für die Abdeckplatten verwendeten einzelnen Steine nach Maßgabe ihrer Form bzw. Abmessung als Moduln eines Kollektivs bzw. einer Familie von Steinbauelementen ausgebildet sind.

Hierdurch ist beispielsweise mit großem Vorteil die Möglichkeit gegeben, diese einzelnen Steine nach Maßgabe von Größe und Bauform einer zu erstellenden Arbeitswanne nach dem bekannten Verfahren des Computer aided design (CAD) zu konstruieren und zu berechnen. Hierdurch werden nicht nur erhebliche Kosten für die Konstrukuion gespart, sondern es wird - vielfach wesentlich wichtiger für Angebot und Ausführung - der hierfür ursprünglich erforderliche Zeitaufwand auf ein Minimum reduziert.

Darüber hinaus reduziert sich die Vielfalt der ursprünglich mit unterschiedlichen Raumformen und Abmessungen erforderlichen Bausteintypen auf das theoretisch vertretbare Minimum, wodurch ebenfalls Kosten und Herstellungszeiten drastisch reduziert werden und die Fertigung einer Arbeitswanne und Speiser in Modulnbauweise erheblich wirtschaftlicher gelingt.

Mit Vorteil sieht eine bevorzugte Ausgestaltung vor, daß die zur Decke der Arbeitswanne in Modulnbauweise zusammengefügten Deckenbauelemente unter Vermeidung einer Deckenwölbung jeweils in horizontaler Erstreckung eine Flachdecke bildend mit einem lichten vertikalen Abstand von der Oberfläche der Schmelze zwischen 75 mm und 700 mm angeordnet sind.

In erfindungswesentlicher Ausgestaltung ist hierzu vorgesehen, daß die Stützelemente als scheitrechte, gerade Bögen auf den Wandungen des die Wanne bildenden Bassins aufliegend ausgebildet und angeordnet sind. Diese Ausbildung der Stützelemente als scheitrechte gerade Bögen bildet die Grundvoraussetzung für die wölbungslose Flachdecke in vergleichsweise geringem Abstand zwischen 150 und 500 mm von der Oberfläche der Schmelze.

In unmittelbarem Zusammenhang mit dieser erfindungswesentlichen Deckenausführung steht eine vorteilhafte Maßnahme, die dadurch gekennzeichnet ist, daß die zwischen den scheitrechten Bögen verlegten Abdeckplatten mit abdeckbaren Öffnungen ausgebildet sein können. Durch solche partiellen Öffnungen in der Deckenkonstruktion, die dabei auch noch problemlos im Öffnungsquerschnitt veränderbar sind, kann beispielsweise eine zur Einstellung der Temperatur vorgesehene Wärmeabstrahlung von der Schmelze eingestellt und damit eine partielle Temperaturrückführung erreicht werden. Bei einer bisher in Gewölbeform ausgeführten Wannendecke war eine solche Möglichkeit einerseits nicht gegeben und andererseits bei dem entsprechend größeren Abstand des Deckengewölbes von der Glasschmelze auch nicht in gleicher Weise wirksam. Weiterhin ermöglichen die abdeckbaren Öffnungen an unterschiedlichen Stellen oberhalb der Arbeitswanne eine unkomplizierte Kontrolle von Zustandsparametern der Glasschmelze auf ihrem Durchflußwege vom Schmelzofen zu den Speisern sowie den Einsatz von zustandsbeeinflussenden Mitteln zur örtlichen Erwärmung oder Kühlung, Erzeugung von Rührbewegung oder Lenkung des Schmelzflusses und dergleichen.

Solche überraschenden Vorteile sind das zusammenwirkende Ergebnis der erfindungsgemäß flach und niedrig ausgeführten Strahlungsdecke oberhalb der Arbeitswanne und deren konstruktive Auflösung in einerseits tragende Stützelemente in Form von scheitrechten geraden Bögen und andererseits dazwischen gelegte gerade Abdeckplatten mit der Möglichkeit, in der Decke an unterschiedlichen Stellen abdeckbare Öffnungen vorsehen zu können.

Ein weiterer Vorteil der Erfindung besteht darin, daß sie für jede beliebige Wannenform angewendet werden kann, so daß, zum Beispiel bei einer Ofenreparatur, ohne Änderung des Wannengrundrisses und ohne nennenswerte Veränderung der bestehenden Wannenverankerung die flache Decke aufgebracht werden kann.

Zwischen den scheitrechten Bögen als transportables und eigenständiges Element können zur Vermeidung zu großer Platten hochkant stehende Balken als Zwischenträger zwischen den scheitrechten Bögen angeordnet sein.

Scheitrechte Bögen nach herkömmlicher Art haben den Nachteil, daß sie unter Belastung eine Neigung zum Auswandern nach oben aufweisen, die Mittel gemäß der Erfindung haben also auch die Aufgabe, die scheitrechten Bögen vertikal in Flucht zu halten und gleichzeitig die Flucht seitlich zu bewahren. Die Erfindung ermöglicht also erstmals, scheitrechte Bögen im entscheidenden Maßstab als Konstruktionselement einzusetzen, da sie als Transporteinheiten hergestellt werden können und so das Fertigen auf der Baustelle entfällt und eine ständige Überwachung während des Auftemperns nicht mehr notwendig ist, gleichzeitig aber eine dauerhafte Funktion gewährleistet ist.

Weitere zweckmäßige Ausgestaltungen des Erfindungsgegenstandes sind entsprechend den Merkmalen der Unteransprüche vorgesehen.

Die Erfindung wird in schematischen Zeichnungen in einer bevorzugten Ausführungsform gezeigt, wobei aus den Zeichnungen weitere vorteilhafte Einzelheiten der Erfindung entnehmbar sind. Die Zeichnungen zeigen im einzelnen:

Figur 1 eine Arbeitswanne mit zwei Speisern, in Draufsicht;

Figur 2 einen Schnitt durch die Arbeitswanne gemäß Figur 1, entlang der Schnittebene II - II in Figur 1;

Figur 3 eine Arbeitswanne in anderer Konfiguration, mit vier Speisern, in Draufsicht;

Figur 4 einen scheitrechten Bogen in Seitenansicht;

Figur 5 einen Rührer im Oberbau der Decke, teils in Seitenansicht, teils im Schnitt,

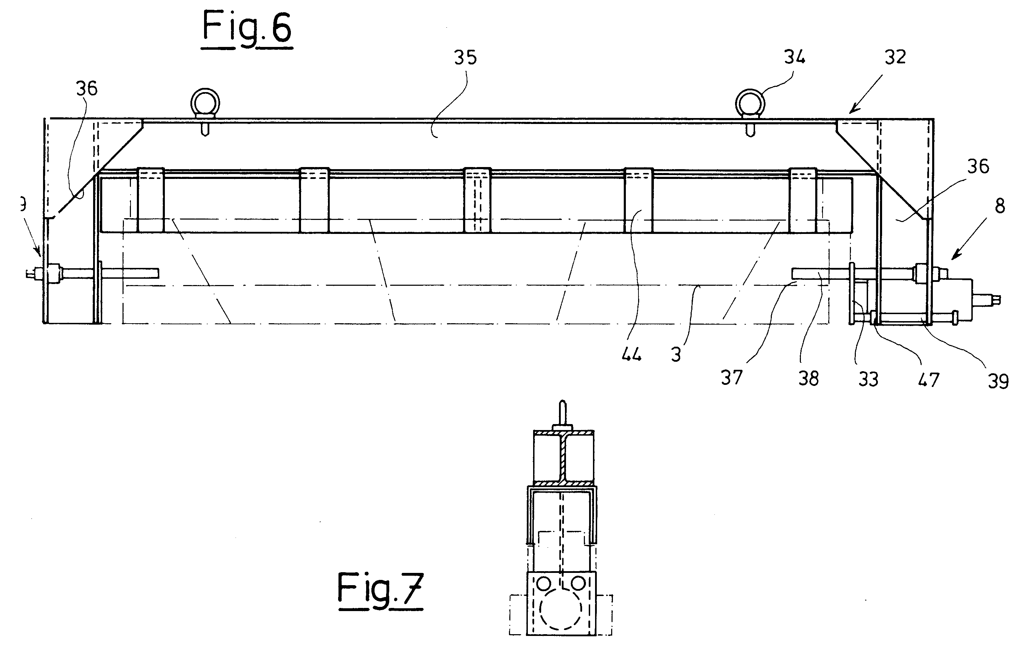

Figur 6 eine Seitenansicht eines scheitrechten Bogens mit Haltetraverse,

Figur 7 einen Schnitt durch den Gegenstand der Figur 6 und

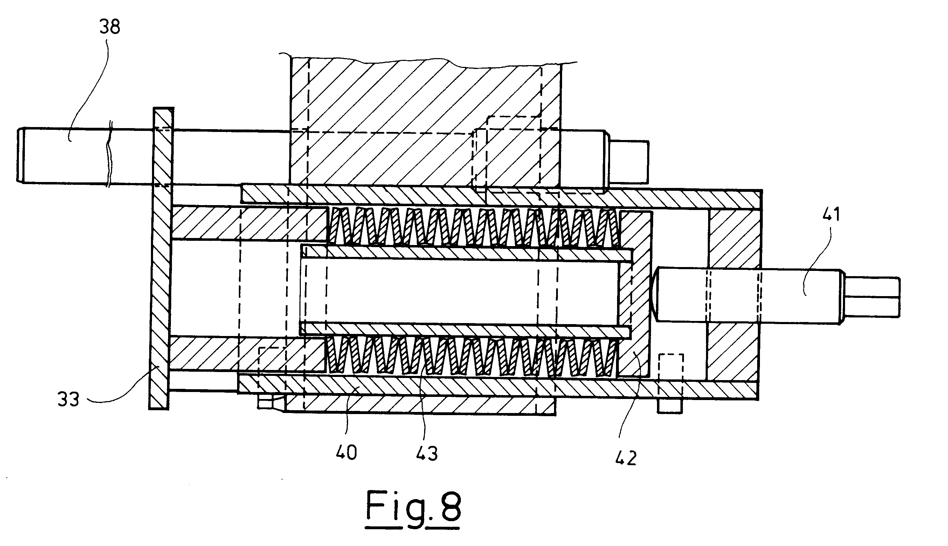

Figur 8 eine Detailzeichnung des Anpreßteils der Traversenseitenstege.

Bei einer Arbeitswanne 2 mit Speisern 30, 30' eines Glasschmelzofens mit einem von einer Strahlungsdecke 1 aus hochhitzebeständigem Ofenbaumaterial abgedeckten, Glasschmelze 18 bzw. 28 im Durchfluß enthaltenden Bassin 7 mit wenigstens einem an diesem angeordneten Speiser 30 besteht die erfindungswesetnlcihe Ausgestaltung der Decke 1 darin, daß diese mit die Arbeitswanne 2 in Abständen A, B, C überspannenden, die Last der Decke 1 aufnehmenden horizontalen Stützelementen 3 und die freien Abstände A, B, C zwischen den Stützelementen 3 überdeckenden, quer zwischen den Stützelementen 3 eingelegten horizontalen Abdeckplatten 4 ausgebildet ist.

Überraschend gelingt es mit der erfindungsgemäßen Aufteilung der Konstruktionselemente der Strahlungsdecke in lastaufnehmende horizontale Stützelemente 3 und die zwischenraumbedeckenden Abdeckplatten 4 eine tragende, flache Strahlungsdecke in vergleichsweise leichter Bauweise herzustellen.

In ganz besonderer Weise eignet sich dieses Deckensystem dafür, daß die sowohl für die Stützelemente 3 als auch für die Abdeckplatten 4 verwendeten einzelnen Steine nach Maßgabe ihrer Form bzw. Abmessung als Moduln eines Kollektivs bzw. einer Familie von Steinbauelementen ausgebildet sind. Diese Bauweise mit als Moduln ausgebildeten bzw. zusammengesetzten Bauelementen ergibt mit weiterem Vorteil, wie vorgängig erwähnt, die Möglichkeit, die Konstruktion als Computer aided design (CAD) durchzuführen, wodurch sich beträchtliche Vorteile hinsichtlich Konstruktionsaufwand, Zeitbedarf für die Konstruktion und Berechnung, sowie Reduzierung der Herstellungskosten durch Verwendung typisierter bzw. modulierter Einzelelemente ergibt.

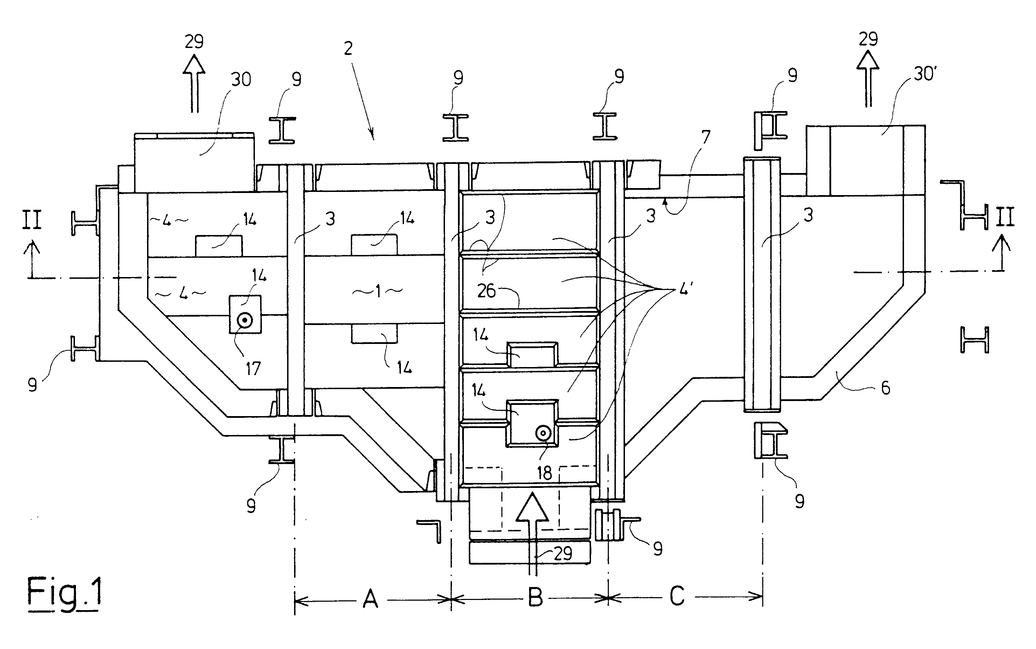

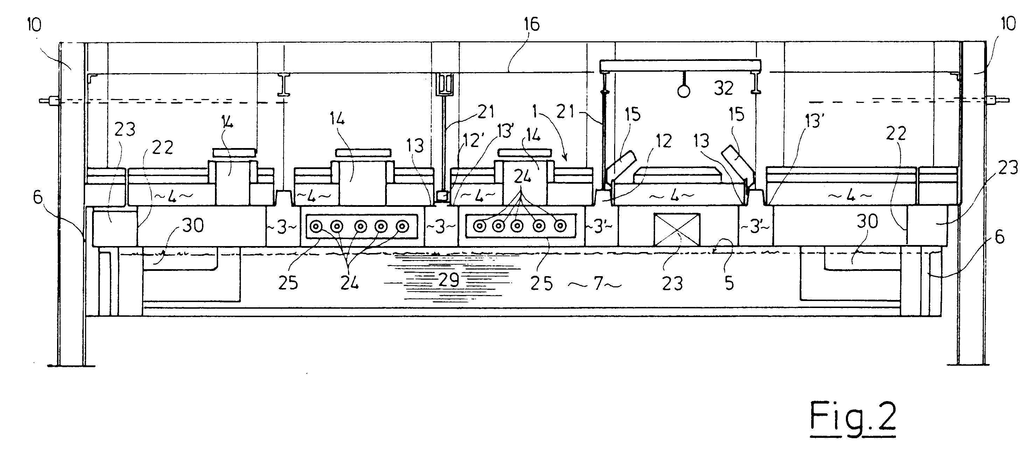

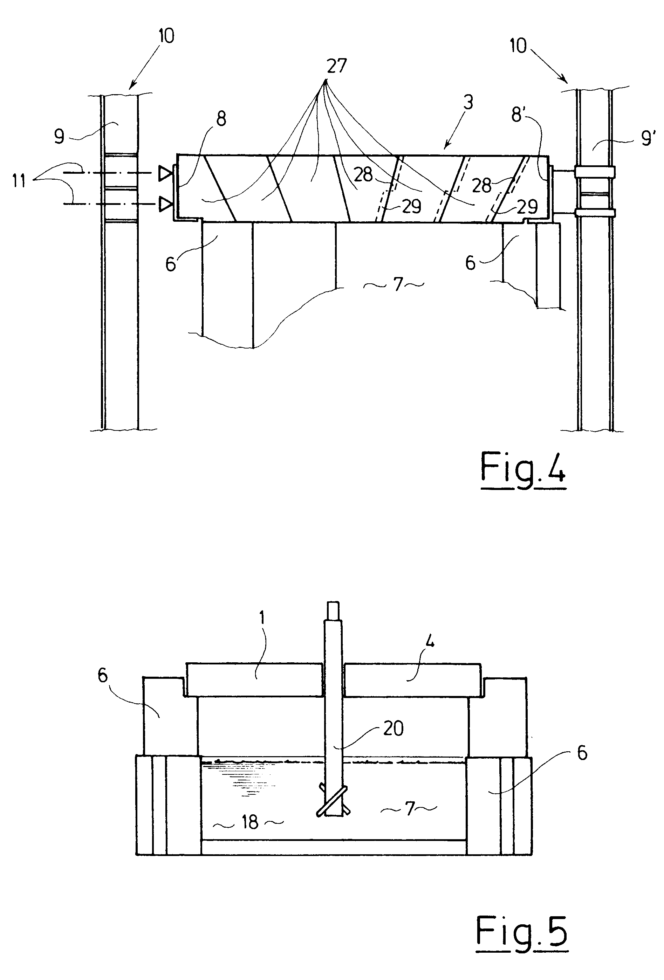

Wie aus der Zusammenschau der Draufsicht gemäß Figur 1 sowie der geschnittenen Darstellung gemäß Figur 2 hervorgeht, sind die zur Decke 1 der Arbeitswanne 2 in Modulnbauweise zusammengefügten Deckenbauelemente 3, 4 unter Vermeidung einer Deckenwölbung jeweils in horizontaler Erstreckung eine Flachdecke bildend mit einem lichten vertikalen Abstand von der Oberfläche 5 der Schmelze 29 zwischen 75 mm und 700 mm angeordnet. Wie weiter hierzu aus der Figur 4 erkennbar ist, sind die Stützelemente 3 jeweils als scheitrechte, gerade Bögen auf den Wandungen 6 des die Wanne 2 bildenden Bassins 7 aufliegend ausgebildet und angeordnet.

Ihre freie Tragfähigkeit erhalten die scheitrechten Bögen 3 dadurch, daß sie unter seitlicher, horizontaler Stützspannung zwischen seitlichen Widerlagern 8, 8' an den Stützträgern 9, 9' des Ofengerüstes 10 eingespannt sind. Dabei weisen die Widerlager 8, 8'Mittel 11 zum Einstellen der horizontalen Widerlagerspannung, vorzugsweise Spannschrauben auf, wie dies in den Figuren 4 und 5 rein symbolisch durch Pfeile dargestellt ist.

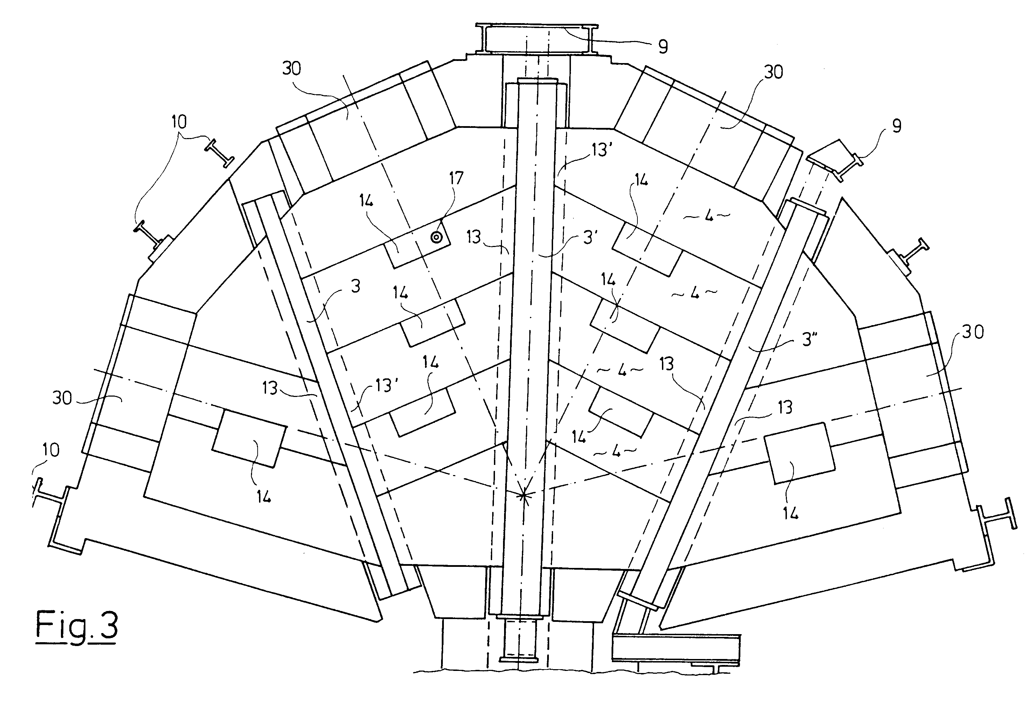

Aus den Figuren 2 und 3 ist weiterhin erkennbar, daß die scheitrechten Bögen 3, 3', 3" mit jeweils seitlich abgetreppten Führungsbereichen 13, 13' ausgebildet und die Abdeckplatten 4 auf diese Führungsbereiche 13, 13' lose aufgelegt sind.

Mit der erfindungsgemäßen Ausgestaltung der Strahlungsdecke oberhalb der Arbeitswanne ergibt sich eine besonders wirksame und somit erfindungswesentliche Ausbildung der Abdeckplatten 4 dadurch, daß diese auf den Führungsbereichen 13, 13' der scheitrechten Bögen 3 in zur Längsachse der Bögen paralleler Richtung verschiebbar sind (Fig. 1) und insbesondere dadurch, daß Abdeckplatten 4 mit abdeckbaren Öffnungen 14 ausgebildet sind.

Wie die Betrachtung der Figuren 1 und 3 hierzu besonders deutlich erkennen lassen, können diese Öffnungen 14 in größerer Anzahl praktisch über das gesamte Areal der Strahlungsdecke verteilt sein. Sie geben somit die Möglichkeit, einerseits durch freigesetzte Öffnungen infolge Abstrahlung partielle Temperaturabsenkungen in der Schmelze einzustellen, mit der Einführung geeigneter Meßinstrumente Zustandsparameter der Schmelze wie Temperatur und Viskosität zu messen oder durch Einführen von an sich bekannten Heiz- oder Kühlelementen den Zustand der Schmelze im Durchlauf durch die Arbeitswanne erheblich und gezielt beeinflussen zu können. Ein weiterer Vorteil ergibt sich dadurch, daß örtlich auch Rührer eingesetzt werden können, welche durch Erzeugung eines örtlichen Konvektionssystems mit Badumwälzung zur Homogenisierung der Schmelzmasse beitragen. Ein derartiger Rührer ist rein beispielhaft in Figur 5 dargestellt.

Weiterhin ist es infolge des erfindungsgemäßen Konstruktionssystems der Strahlungsdecke 1 möglich, daß Abdeckplatten 4, wie dies in Figur 2 gezeigt ist, von mobilen Haltevorrichtungen 15 verschiebbar gehalten sind. Eine solche Haltevorrichtung kann beispielsweise, wie dies rein schematisch gezeigt ist, eine bewegliche Zange aufweisen, die mittels eines bekannten Hebezeuges in einer hängenden Schienenbahn 32 verfahrbar ist. Damit gelingt es beispielsweise, wenn die Temperatur der Schmelze örtlich gesenkt werden soll, die eine oder andere Abdeckplatte 4 zeitweilig aus ihrer Lagerung herauszunehmen und beiseite zu legen. Hierzu ist besonders hilfreich und vorteilhaft, daß im Zusammenhang mit der erfindungsgemäßen Flachdeckenkonstruktion oberhalb der Flachdecke 1 eine am seitlichen Ofengerüst 10 aufgeständerte, horizontal die Flachdecke überspannende Arbeits- und Begehungsbühne 16 angeordnet ist.

Wie weiterhin aus der Zusammenschau der Figuren 2 mit den Figuren 1 und 3 erkennbar ist, eignet sich die Bühne im Zusammenwirken mit den Hauptmerkmalen der flachen Strahlungsdecke und wegen der unkomplizierten Zugänglichkeit der Schmelzenoberfläche 5 durch die Öffnungen 14 hindurch sehr vorteilhaft und unkompliziert zum Einsatz von Meßgeräten 17 beispielsweise zum Messen von Temperatur und/oder Viskosität der Glasschmelze 18 sowie von Heiz- oder Kühlelementen 19, Rührern 20 und/oder dergleichen Mitteln zur Beeinflussung und/oder Kontrolle von Zustandsparametern der Glasschmelze. Solche Elemente sind rein schematisch in Figur 1 angedeutet.

Und schließlich ist zur Temperierung der Glasschmelze vorgesehen, daß unterhalb der Flachdecke 1, vorzugsweise im Eckbereich 22 zwischen Decke 1 und Wandung 6 des Bassins 7, Brenner 23 bzw. Leisten 25 mit Brennerbatterien 24 vorgesehen sind.

Zufolge der unterschiedlichen Beanspruchung der Konstruktionselemente 3 bzw. 4 der Strahlungsdecke 1 sind diese aus unterschiedlichen Feuerfestmaterialien hergestellt. Vorzugsweise sind die Abdeckplatten 4 aus hochtonerdehaltigem Feuerfestmaterial wie Sillimanit hergestellt. Weiterhin sind diese Abdeckplatten 4' gemäß Darstellung in Figur 1 Mitte, mit gebrochenen, insbesondere abgeschrägten, abgerundeten oder in anderer Weise abgefasten Kantenbereichen 26 ausgebildet. Dadurch wird erfolgreich die Gefahr des Abplatzens von Steinpartikeln im Bereich dieser Kanten, welche das Glasschmelzbad verunreinigen könnten, vermieden.

Weiter ist mit Vorteil vorgesehen, daß die Steinelemente 23 der scheitrechten Bögen 23 aus Feuerfestmaterial mit sehr hohem Kieselsäuregehalt wie Silika-Material hergestellt sind.

Die erfindungsgemäße Ausbildung einer Arbeitswanne für einen Glasschmelzofen mit Speiser ist außerordentlich zweckmäßig und einfach. Mit Vorteil wird infolge dieser Ausgestaltung eine wirtschaftliche Bauweise ebenso ermöglicht, wie eine vollständige Möglichkeit zur Kontrolle und Beeinflussung der Parameter des geschmolzenen Glasgutes. Insofern kann von einer idealen Lösung der eingangs gestellten Aufgabe gesprochen werden.

Gemäß den Zeichnungen 6 - 8 besteht die Erfindung auch darin, daß ein scheitrechter Bogen 3 aus Steinen aus Feuerfestmaterial, wie er seit langem bekannt ist, mittels eines Rahmens 32 nicht nur als Transporteinheit gestaltet wird, sondern daß er auch die bisherigen Nachteile vermeidet, während des Auftemperns und während des Betriebes besonderer Aufmerksamkeit zu bedürfen.

Der scheitrechte Bogen 3 wird von einem aus einer Traverse 35 und beidseitig nach unten gerichteten Seitenstegen 36 bestehenden Rahmen 32 gehalten, der mittels Federpaketen 43 Längenausdehnungen während des Auftemperns ausgleichen kann.

Die Federn 43, die beispielsweise als Tellerfedern ausgebildet sein können, sind in einem Hohlzylinder 40 angeordnet und werden durch eine Druckplatte 42, die über einen Schraubbolzen 41 in Position gehalten wird, vorgespannt.

Die Kraft des Federpaketes 43 wirkt auf eine Druckplatte 33, die an den Stirnseiten des scheitrechten Bogens 3 anliegt. Durch die Ausdehnung der Federn wird dabei beim Auftempern gewährleistet, daß sowohl die Haltekraft des Bogens 3 erhalten bleibt, andererseits die Ausdehnung aber aufgenommen werden kann. Um auszuschließen, daß bei einer Ermüdung des Materials der Federn 43 ein Einsturz des scheitrechten Bogens erfolgt, werden die Druckplatten 33 mittels Schraubbolzen 39 nach dem Auftempern festgestellt, deren Freiraum so bemessen ist, daß sie sich in Andruckrichtung frei bewegen können, so daß sie bei einer Temperaturminderung das Verschieben der Andruckplatte 33 durch das Federpaket 43 nicht behindern. Die an den Seitenstegen 36 anliegende Spannschraube 47 drückt den Bolzen 39 gegen das Feuerfestmaterial des Bogens 3, ohne daß das andere Ende des Bolzens 39 eine Verschiebung zur Beibehaltung der Spannung des Bogens 3 behindern würde.

Um den scheitrechten Bogen als Transporteinheit zu gestalten, weist die obere Traverse 35 Heißaugen 34 auf und die Halterung des Bogens erfolgt über Haltebolzen 38, die in Bohrungen 37 in Feuerfestmaterial eindringen und von den seitlichen Stegen 36 gehalten werden.

Zur Einstellung der Längsflucht sind an der Traverse 35 U-förmige Profile 44 angebracht, die über isolierendes Schamotte 46 an den Feuerfest-Steinen angreifen. Da sie auf der Oberseite der Steine anliegen, wird gewährleistet, daß die Steine auch nicht unter Druck nach oben auswandern können. Damit wird der scheitrechte Bogen als beherrschbares, für sich berechenbares und transportables Bauelement geschaffen, der es ermöglicht, direkt eine Abdeckung über der Oberfläche der Glasschmelze zu schaffen. Durch die Schaffung von Öffnungen kann eine spezielle Kühlung z. B. vor dem Feeder erfolgen, es können aber auch, wie vorstehend genannt, Elemente für eine zusätzliche Heizung, zur Temperaturmessung, zur Rührung und dergleichen eingesetzt werden.

Da die zwischen den als Balken wirkenden scheitrechten Bögen eingesetzten Platten leicht auswechselbar sind und ein Stützgerüst über der Wannendecke nicht mehr erforderlich ist, können Reparaturen, Austausch oder Inspektion ohne Behinderungen vorgenommen werden.

Da auch eine Vorfertigung innerhalb eines Produktionsbetriebes und damit eine Standardisierung möglich ist, kann von einer idealen Lösung der anstehenden Probleme gesprochen werden.

**Patentansprüche**

1. Decke für einen Glasschmelzofen oder eine Arbeitswanne, einen Läuterteil oder dgl. eines Glasschmelzofens (Bassin) aus Feuerfestmaterial, wobei die Decke (1) mit die Arbeitswanne (2) in Abständen überspannenden, die Last der Decke (1) aufnehmenden horizontalen Stützelementen (3) und die freien Abstände zwischen den Stützelementen (3) überdeckenden, quer zwischen den Stützelementen (3) eingelegten horizontalen Abdeckplatten (4) ausgebildet ist, dadurch gekennzeichnet,
   - daß die Stützelemente (3) als scheitrechte, gerade Bögen auf den Wandungen (6) des die Wanne (2) bildenden Bassins (7) aufliegend ausgebildet und angeordnet sind und
   - daß die scheitrechten Bögen (3) unter seitlicher, horizontaler Stützspannung zwischen seitlichen Widerlagern (8, 8') an den Stützträgern (9, 9') des Ofengerüstes (10) eingespannt sind und
   - daß die sowohl für die Stützelemente (3) als auch für die Abdeckplatten (4) verwendeten einzelnen Steine nach Maßgabe ihrer Form bzw. Abmessung als Module eines Kollektivs bzw. einer Familie von Steinbauelementen ausgebildet sind.

2. Decke nach Anspruch 1, dadurch gekennzeichnet, daß die zur Decke (1) der Arbeitswanne (2) in Modulbauweise zusammengefügten Deckenbauelemente (3, 4) unter Vermeidung einer Deckenwölbung jeweils in horizontaler Erstreckung eine Flachdecke bildend mit einem lichten vertikalen Abstand von der Oberfläche (5) der Schmelze zwischen 75 mm und 700 mm angeordnet sind.

3. Decke nach Anspruch 1, dadurch gekennzeichnet, daß die Widerlager (8, 8') Mittel (11) zum Einstellen der horizontalen Widerlagerspannung, vorzugsweise Spannschrauben, aufweisen.

4. Decke nach einem der Ansprüche 1 bis 3, dadurch gekennzeichnet, daß die scheitrechten Bögen (3, 3') mit jeweils seitlich abgetreppten Führungsbereichen (13, 13') ausgebildet und die Abdeckplatten (4) auf diese Führungsbereiche (13, 13') lose aufgelegt sind.

5. Decke nach einem der Ansprüche 1 bis 4, dadurch gekennzeichnet, daß auf den Führungsbereichen (13), 13') der scheitrechten Bögen (3) in zur Längsachse der Bögen paralleler Richtung Abdeckplatten (4) verschiebbar sind.

6. Decke nach einem der Ansprüche 1 bis 5, dadurch gekennzeichnet, daß die Abdeckplatten (4) mit abdeckbaren Öffnungen (14) ausgebildet sind.

7. Decke nach einem der Ansprüche 1 bis 6, dadurch gekennzeichnet, daß die Abdeckplatten (4) von mobilen Haltevorrichtungen (15) verschiebbar gehalten sind.

8. Decke nach einem der Ansprüche 1 bis 7, dadurch gekennzeichnet, daß oberhalb der Flachdecke (1) eine am seitlichen Ofengerüst (10) aufgeständerte, horizontal die Flachdecke (1) überspannende Arbeits- und Begehungsbühne (16) angeordnet ist.

9. Decke nach einem der Ansprüche 1 bis 8, dadurch gekennzeichnet, daß die Abdeckplatten (4) mit gebrochenen, insbesondere abgeschrägten, abgerundeten oder in anderer Weise abgefasten Kantenbereichen (26) ausgebildet sind.

10. Decke nach einem der Ansprüche 1 bis 9, dadurch gekennzeichnet, daß Steinelemente (17) der scheitrechten Bögen mit abgetreppten Stützflächen (28, 29) ausgebildet sind.

11. Decke nach einem der Ansprüche 1 bis 10, dadurch gekennzeichnet, daß die Widerlager (8, 9) für die scheitrechten Bögen (3) an einem den Balken (3) überspannenden Rahmen (32) ausgebildet sind, der aus einer Traverse (35) und beidseitig nach unten gerichteten Seitenstegen (36) besteht.

**12.** Decke nach Anspruch 11, dadurch gekennzeichnet, daß der Rahmen (32) vorspannbare Andruckplatten (33) zur Anlage an den Stirnseiten der Balken (3) aufweist.

**13.** Decke nach einem der Ansprüche 11 oder 12, dadurch gekennzeichnet, daß der Rahmen zur Bildung einer Transporteinheit an seiner Traverse (35) Heißaugen (34) und an den Seitenstegen (36) in Bohrungen (37) eingesetzte Haltbolzen (38) aufweist.

**14.** Decke nach Anspruch 12, dadurch gekennzeichnet, daß die Seitenstege (36) Andruckplatten (33) und den Bogen im Dauerbetrieb fixierende Bolzen (39) aufweisen.

**15.** Decke nach Anspruch 12, dadurch gekennzeichnet, daß zum Andruck der Andruckplatten (33) ein mit diesen verbundener, unter Federvorspannung liegender Hohlzylinder (40) vorhanden ist, und eine die Federspannung über einen Schraubbolzen (41) einstellende Druckplatte (42) an einem zwischen dem Hohlzylinder (40) und der Druckplatte angeordneten Federpaket (43) anliegt.

**16.** Decke nach Anspruch 12, dadurch gekennzeichnet, daß unter der Traverse (35) U-förmige Profileisen (44) angeordnet sind, deren seitliche Stege (45) an den oberen Bereichen des Feuerfestmaterials der Balken (3) anliegen.

**17.** Decke nach Anspruch 16, dadurch gekennzeichnet, daß zwischen den Stegen (45) und dem Feuerfestmaterial isolierendes Schamott (46) angeordnet ist.

**Claims**

**1.** A roof for a glass melting furnace or the working chamber, refining section or the like of a glass melting furnace (tank) of refractory material, the roof (1) being constructed with horizontal, spaced support elements (3) spanning the working chamber (2) and bearing the load from the roof (1) and cover plates (4) covering the free spaces between the support elements (3) and positioned transversely between the support elements (3), characterized in that
- the support elements (3) are constructed and arranged as horizontal, straight bridges lying on the walls (6) of the tank (7) forming the chamber (2) and
- the horizontal bridges (3) are held under lateral, horizontal supporting tension between lateral abutments (8, 8') on the supporting beams (9, 9') of the furnace frame (10) and
- the individual stones used both for the support elements (3) and for the cover plates (4) are constructed according to their shape and dimensions as modules of a collective or family of stone structural members.

**2.** A roof according to claim 1, characterized in that the structural roof members (3, 4) assembled in modular manner to form the roof (1) of the working chamber (2) are arranged in horizontal extension without arching to form a flat roof and at an internal vertical distance from the surface (5) of the melt of between 75 mm and 700 mm.

**3.** A roof according to claim 1, characterized in that the abutments (8, 8') comprise means (11) for adjusting the horizontal abutment tension, preferably locking screws.

**4.** A roof according to any one of claims 1 to 3, characterized in that the horizontal bridges (3, 3') are each constructed with laterally stepped guide areas (13, 13') and in that the cover plates (4) are laid loosely on these guide areas (13, 13').

**5.** A roof according to any one of claims 1 to 4, characterized in that cover plates (4) can be displaced on the guide areas (13, 13') of the horizontal bridges (3) in the direction parallel to the longitudinal axis of the bridges.

**6.** A roof according to any one of claims 1 to 5, characterized in that the cover plates (4) are constructed with coverable apertures (14).

**7.** A roof according to any one of claims 1 to 6, characterized in that the cover plates (4) are held displaceably by mobile holding devices (15).

**8.** A roof according to any one of claims 1 to 7, characterized in that above the flat roof (1) there is arranged a working and walking platform (16) standing on the lateral furnace frame (10) and horizontally spanning the flat roof (1).

**9.** A roof according to any one of claims 1 to 8, characterized in that the cover plates (4) are constructed with broken, especially bevelled, rounded or otherwise chamfered edge areas (26).

10. A roof according to any one of claims 1 to 9, characterized in that stone members (17) of the horizontal bridges are constructed with stepped supporting surfaces (28, 29).

11. A roof according to any one of claims 1 to 10, characterized in that the abutments (8, 9) for the horizontal bridges (3) are constructed on a frame (32) spanning the girders (3), which frame (32) consists of a crossbar (35) and side webs (36) directed downwards on both sides.

12. A roof according to claim 11, characterized in that the frame (32) comprises prestressable pressure plates (33) for resting on the ends of the girders (3).

13. A roof according to either of claims 11 or 12, characterized in that the frame comprises hoist lugs (34) on its crossbar (35) and retaining bolts (38) inserted in bores (37) on the side webs (36) to form a transportation unit.

14. A roof according to claim 12, characterized in that the side webs (36) comprise pressure plates (33) and bolts (39) fixing the bridge in continuous operation.

15. A roof according to claim 12, characterized in that to press the pressure plates (33) a hollow cylinder (40) connected therewith and under spring loading is provided, and in that a pressure plate (42) adjusting the spring loading by means of a screw bolt (41) rests on a spring assembly (43) arranged between the hollow cylinder (40) and the pressure plate.

16. A roof according to claim 12, characterized in that U-shaped iron sections (44) are arranged under the crossbar (35), the lateral webs (45) of which iron sections (44) rest on the upper areas of the refractory material of the girders (3).

17. A roof according to claim 16, characterized in that insulating fireclay (46) is arranged between the webs (45) and the refractory material.

**Revendications**

1. Voûte de four de fusion de verre ou de cuve de travail, de zone d'affinage, ou d'une partie similaire d'un four de fusion de verre (bassin) en matériau réfractaire, la voûte (1) étant constituée par des éléments de soutien (3) horizontaux qui sont placés au-dessus de la cuve de travail (2) avec des intervalles les séparant et qui supportent la charge de la voûte, ainsi que par des plaques de couverture horizontales (4) qui recouvrent les intervalles libres situés entre les éléments de soutien et qui sont disposées transversalement entre les éléments de soutien,
caractérisée en ce que
   - les éléments de soutien (3) se présentent sous forme d'arceaux plats droits disposés en appui sur les parois (6) du bassin (7) formant la cuve (2), et
   - les arceaux (3) plats sont mis sous contrainte entre des contre-appuis (8, 8') latéraux situés sur les poutres de soutien (9, 9') de la structure (10) du four, grâce à une force latérale horizontale de compression, et
   - les blocs individuels utilisés aussi bien pour les éléments de soutien (3) que pour les plaques de couverture (4) constituent, selon leur forme et leurs dimensions, des modules qui font partie d'un groupe, ou d'une famille, de blocs élémentaires.

2. Voûte selon la revendication 1, caractérisée en ce que les éléments de construction de voûte assemblés de façon modulaire pour former la voûte (1) de la cuve de travail (2), tout en évitant la formation d'une courbure de voûte, sont disposés chacun dans le sens horizontal pour former une étendue horizontale de voûte plate avec un léger écart, par rapport à la surface (5) de verre en fusion, compris entre 75 mm et 700 mm.

3. Voûte selon la revendication 1, caractérisée en ce que les contre-appuis (8, 8') présentent des moyens (11) de réglage de la contrainte horizontale de contre-appui, de préférence des vis de serrage.

4. Voûte selon l'une des revendications 1 à 3, caractérisée en ce que les arceaux plats (3, 3') forment des zones de guidage (13, 13') ayant chacun des décrochements latéraux, et en ce que les plaques de couverture (4) sont placées de façon libre sur ces zones de guidage (13, 13').

5. Voûte selon l'une des revendications 1 à 4, caractérisée en ce que des plaques de couverture (4) peuvent être déplacées sur les zones de guidage (13, 13') des arceaux plats (3) dans la direction parallèle à l'axe longitudinal des arceaux.

6. Voûte selon l'une des revendications 1 à 5, caractérisée en ce que les plaques de couverture (4) comportent des ouvertures (14) susceptibles d'être recouvertes.

7. Voûte selon l'une des revendications 1 à 6, caractérisée en ce que les plaques de couverture (4) sont maintenues, de façon à pouvoir être déplacées, par des dispositifs mobiles de maintien (15).

8. Voûte selon l'une des revendications 1 à 7, caractérisée en ce qu'une passerelle (16) de travail et de déplacement est disposée au-dessus de la voûte plate (1), laquelle passerelle est montée sur la structure latérale (10) du four, et enjambe horizontalement la voûte plate (1).

9. Voûte selon l'une des revendications 1 à 8, caractérisée en ce que les plaques de couverture (4) comportent des zones de bord (26) discontinues, en particulier des zones de bord biseautées, arrondies ou chanfreinées d'une autre manière.

10. Voûte selon l'une des revendications 1 à 9, caractérisée en ce que les éléments formant blocs (17) des arceaux plats comportent des surfaces de soutien (28, 29) avec des décrochements.

11. Voûte selon l'une des revendications 1 à 10, caractérisée en ce que les contre-appuis (8, 9) destinés aux arceaux plats (3) sont formés sur un bâti (32) qui enjambe la poutre (3), et qui est constitué par une traverse (35) et par deux pièces perpendiculaires latérales (36) dirigées vers le bas de chaque côté.

12. Voûte selon la revendication 11, caractérisée en ce que le bâti (32) présente des plaques de poussée (33) qui peuvent être mises sous précontrainte en appui contre les côtés frontaux des poutres (3).

13. Voûte selon l'une des revendications 11 ou 12, caractérisée en ce que le bâti, pour former une unité transportable, présente des oeillets (34) sur sa traverse (35) et des boulons de maintien (38) mis en place dans des alésages (37) des pièces perpendiculaires latérales (36).

14. Voûte selon la revendication 12, caractérisée en ce que les pièces perpendiculaires latérales (36) présentent des plaques de poussée (33) et en ce que le boulon (39) bloque l'arceau lors du fonctionnement en continu.

15. Voûte selon la revendication 12, caractérisée en ce qu'en vue d'exercer une force de compression sur les plaques de poussée (33) il y a un cylindre creux (40) relié à celles-ci, et placé sous la précontrainte de ressorts, et en ce qu'une plaque de poussée (42) qui règle la compression des ressorts avec un boulon fileté (41) est en appui contre un ensemble compact de ressorts (43) disposé entre le cylindre creux (40) et la plaque de poussée.

16. Voûte selon la revendication 12, caractérisée en ce que sous la traverse (35) sont disposés des fers profilés (44) en U dont les branches latérales (45) sont en appui contre les zones supérieures du matériau réfractaire des poutres (3).

17. Voûte selon la revendication 16, caractérisée en ce qu'on dispose de l'argile réfractaire (46) d'isolation entre les branches (45) et le matériau réfractaire.

EP 0 244 710 B1

Fig.1

Fig.2

Fig.3

Fig.4

Fig.5

Fig.6

Fig.7

14

Fig.8